# EUROPEAN PATENT SPECIFICATION

(11) **EP 3 598 712 B1**
(45) Date of publication and mention of the grant of the patent: **12.07.2023**
(21) Application number: 18184463.0
(22) Date of filing: 19.07.2018
(51) Int. Cl.: H04L 9/40

(54) **COMMISSIONING AN INDUSTRIAL CONTROLLER SYSTEM FOR ESTABLISHING A SECURE COMMUNICATION**
INBETRIEBNAHME EINES INDUSTRIEREGLERSYSTEMS ZUR EINRICHTUNG EINER SICHEREN KOMMUNIKATION
MISE EN SERVICE D'UN SYSTÈME DE CONTRÔLEUR INDUSTRIEL POUR ÉTABLIR UNE COMMUNICATION SÉCURISÉE

(43) Date of publication of application: 22.01.2020
(73) Proprietor: CODESYS Holding GmbH, 87439 Kempten (DE)
(72) Inventor: Schaber, Markus, 87435 Kempten (DE)
(74) Representative: Kretschmann, Dennis

(56) References cited:
- WO-A1-2010/023619
- WO-A1-2015/049259
- WO-A2-2008/001267

## Description

### Field of the Invention

The disclosure relates to techniques for establishing a secure communication between an industrial controller system and a communication partner unit in an industrial control environment, such as to reduce the risk of potential attacks on the industrial controller system.

### Background

Industrial controller systems are ubiquitous in modern-day manufacturing, and typically run an industrial control program that is adapted to control an associated machinery or exchange instructions and data with the associated machinery. In order to make efficient use of the industrial controller system and to enhance the user comfort, it is desirable that the industrial controller system can be accessed remotely via a communication network. For instance, the user may want to update the industrial controller system with new control software or new parameter sets via the communication network. Moreover, the industrial controller system may exchange data with a communication partner unit over the communication network, wherein the communication partner unit may be a central management unit, another industrial controller system or a database. The communication network may be a proprietary network, but may also be a public network, such as the Internet.

While the possibility of communicating with the industrial controller system remotely enhances the operability and user comfort, it also makes the industrial controller system vulnerable to potential attacks, such as unauthorized access or viruses. In state-of-the-art communication protocols, industrial controller systems typically take the server role in communication, and therefore need to validate every incoming communication attempt. Each open communication endpoint is a potential attack vector. This is particularly true as operating systems and firmware/ software on industrial controller systems are sometimes not updated as regularly as normal office PCs.

WO 2010/023619 A1, WO 2015/049259 A1 and WO 2008/001267 A2 relate to techniques for autonomous commissioning of a wireless control network.

What is needed is an improved method and system for establishing secure communication between an industrial controller system and a communication partner that protects the industrial controller system efficiently against unauthorized access or computer malware while still supporting standardized communication protocols.

### Overview of the Invention

This objective is addressed with a method for establishing secure communication according to independent claim 1, and an industrial controller system according to independent claim 5. The dependent claims relate to preferred embodiments.

In a first aspect, the invention relates to a method for establishing a secure communication between an industrial controller system and a communication partner unit over a communication link, wherein: In a commissioning phase, the industrial controller system accepts an incoming communication from at least one first communication partner unit over a communication link, and establishes a bidirectional communication channel with the at least one communication partner unit, in particular in response to the incoming communication. In an operation phase subsequent to the commissioning phase, the industrial controller system communicates with the at least one first communication partner unit via the established bidirectional communication channel, and blocks an incoming communication from a second communication partner unit different from the at least one first communication partner unit.

In the commissioning phase, the industrial controller system accepts an identified incoming communication request over the communication link from any first communication partner unit, and establishes a collection of the first communication partner units based on the incoming communications received from the at least one first communication partner unit over the communication link (20).

In the operation phase, the industrial controller system accepts an incoming communication over the communication link if the incoming communication pertains to one of the at least one first communication partner units according to the collection.

In the operation phase, the industrial controller system blocks an incoming communication from every second communication partner unit that does not pertain to the collection, or for which no instruction is received from a user.

The industrial controller system switches to the commissioning phase automatically upon start-up of the industrial controller system.

Further, the industrial controller system switches from the commissioning phase to the operation phase in response to an elapsed time window and/or in response to a user instruction; wherein the commissioning phase is shorter than the operation phase.

The industrial controller system switches from the operation phase back to the commissioning phase in response to a pre-determined event, wherein the pre-determined event comprises a reboot of the industrial controller system.

The techniques of the invention may hence restrict the server role of the industrial controller system to the commissioning phase, which may be a limited time window. Only in the commissioning phase, the industrial controller system may accept and validate every incoming communication attempt, and respond by establishing a corresponding bidirectional communication channel to the respective first communication partner unit that requested its service. In the subsequent operation phase, the industrial controller system may communicate with the first communication partner units to which bidirectional channels have been established in the commissioning phase, but may block incoming communication from second communication partner units with which no bidirectional channel has been established in the commissioning phase.

These techniques may limit the exposure of the industrial controller system to potential attacks or malware from unknown or malicious sources to the commissioning phase, which may be a phase that is time-limited and in which the operation of the industrial controller system may be closely supervised by the user, either remotely or on site. Typically, the commissioning phase may be invoked after a startup or boot/reboot of an industrial controller system, or if the industrial controller system is added to an industrial control environment. The subsequent operation phase may correspond to a routine operation of the industrial controller system in the industrial control environment. In the operation phase, the industrial controller system may block an incoming communication from a second communication partner unit with which no bidirectional communication channel has been established in the commissioning phase, thereby efficiently protecting the industrial controller system against unauthorized access or computer malware.

In the context of the present disclosure, the industrial controller system may be any system adapted to run industrial control software, such as in the form of compiled industrial control software or ladder logic instructions, and/or control an industrial process, application or machinery.

For instance, the industrial controller system may comprise at least one industrial controller unit, or may be an industrial controller unit.

In an example, the industrial controller system comprises a plurality of industrial controller units, and a gateway unit connected to the plurality of industrial controller units.

For instance, the gateway unit may accept the incoming communication from the at least one first communication partner unit, and may broadcast it to the plurality of industrial controller units, or forward it to a selected industrial controller unit among the plurality of industrial controller units.

A (first or second) communication partner unit, in the sense of the present disclosure, may be any unit adapted to communicate with the industrial controller system over the communication link.

In some examples, the (first or second) communication partner unit comprises another industrial controller system, or a central management or monitoring system, or a database.

According to an example, the (first or second) communication partner unit comprises a SCADA (supervisory control and data acquisition) system and/or a gateway unit and/or a proxy server.

A communication link, in the context of the present disclosure, may be any signal connection or data connection between the industrial controller system and the (first or second) communication partner unit that allows the industrial controller system and the (first or second) communication partner unit to exchange signals or data. For instance, the communication link may form part of a proprietary or public communication network, and may comprise wired or wireless connections. The communication link may involve electric signals and/or optical signals, or any other signal carrier.

An incoming communication, in the sense of the present disclosure, may relate to any message or request that is sent to the industrial controller system via the communication link, such as a request for establishing a bidirectional communication channel. The incoming communication may have a variety of different data types or data formats, and may pertain to any data transmission protocol that is supported by the industrial controller system.

The incoming communication may, in the context of the present disclosure, refer to a communication or a communication request that is identified at the industrial controller system. In other words, the incoming communication may refer to a communication in a physical format or data format that the industrial controller system is adapted to identify.

In the commissioning phase, the industrial controller system accepts an identified incoming communication request over the communication link from any communication partner unit.

In other words, in the commissioning phase the industrial controller system may validate every incoming identified communication attempt from any communication partner unit.

In particular, in the commissioning phase the industrial controller system does not block any incoming communication via the communication link from any communication partner unit.

Thus, the industrial controller system may operate as a server in the commissioning phase.

Hence, in the commissioning phase, bidirectional communication channels to first communication partner units in the industrial control environment may be freely established.

However, in the subsequent operation phase the industrial controller system blocks any incoming communication from any communication partner unit different from the at least one first communication partner unit, or accepts an incoming communication from a communication partner unit different from the at least one first communication partner unit only upon receiving a corresponding user instruction.

The industrial controller system can hence be efficiently protected against potential attacks or malware in the operation phase while still allowing a convenient commissioning of the industrial controller system in the commissioning phase that makes use of standard established communication protocols.

In the commissioning phase, the industrial controller system establishes a collection of the first communication partner units based on the incoming communications received from the at least one first communication partner unit over the communication link.

The industrial controller system may refer to the collection as a set of trusted communication partner units from which incoming communication may be accepted in the subsequent operation phase.

The industrial controller system accepts an incoming communication over the communication link if the incoming communication pertains to one of the at least one first communication partner units according to the collection.

In particular, the industrial controller system may accept an incoming communication over the communication link only if the incoming communication pertains to one of the at least one first communication partner units according to the collection, or upon receiving a user instruction.

In the operation phase, the industrial controller system blocks an incoming communication from every second communication partner unit that does not pertain to the collection, or for which no instruction is received from a user.

The instruction may be an exception instruction that may be received from the user over the communication link, or via any other communication interface.

The industrial controller system may store the collection as a list of trusted first communication partner units.

In response to a user instruction, a second communication partner unit may be added to the collection of the first communication partner units.

The industrial controller system switches to the commissioning phase automatically upon start-up of the industrial controller system.

Hence, the industrial controller system may receive incoming communication requests from first communication partner units in the commissioning phase, and may establish bidirectional communication channels to the first communication partner units. This allows for a convenient automatic commissioning of the industrial controller system in the industrial control environment that requires only minimum user interference.

Additionally, the industrial controller system may switch to the commissioning phase upon receipt of a user instruction.

The industrial controller system switches from the commissioning phase to the operation phase in response to an elapsed time window and/or in response to a user instruction.

The time window may be a predetermined time window, and/or a time window selected by a user.

In general, the commissioning phase will be chosen shorter than the operation phase.

The user instruction may be received via the communication link, or via any other communication interface.

According to an embodiment, the industrial controller switches from the operation phase back to the commissioning phase in response to a pre-determined event, and/or in response to a user instruction.

The pre-determined event comprises a reboot of the industrial controller system.

In response to the pre-determined event, the industrial controller system may hence be re-commissioned in the industrial control environment.

The user instruction may be received via the communication link, or via any other communication interface.

In a second aspect, the disclosure also relates to a computer program or to a computer program product comprising computer-readable instructions, wherein the computer-readable instructions are adapted, when read by a computer, to implement on an industrial controller system a method with some or all of the features described above.

In a third aspect, the disclosure relates to an industrial controller system comprising: a communication unit adapted to, in a commissioning phase, accept an incoming communication from at least one first communication partner unit over a communication link, and to establish a bidirectional communication channel with the at least one first communication partner unit, in particular in response to the incoming communication.

The communication unit is further adapted to, in an operation phase subsequent to the commissioning phase, communicate with the at least one first communication partner unit via the established bidirectional communication channel, and to block an incoming communication from a second communication partner unit different from the at least one first communication partner unit.

The communication unit is adapted to, in the commissioning phase, accept an identified incoming communication request over the communication link from any first communication partner unit, and establish a collection of the first communication partner units based on the incoming communications received from the at least one first communication partner unit over the communication link.

Further, the communication unit is adapted to, in the operation phase, accept an incoming communication over the communication link if the incoming communication pertains to one of the at least one first communication partner units according to the collection; wherein the communication unit is adapted to, in the operation phase, block an incoming communication from every second communication partner unit that does not pertain to the collection, or for which no instruction is received from a user.

The communication unit is further adapted to switch its operating state to the commissioning phase automatically upon start-up of the industrial controller system. The communication unit is further adapted to switch its operating state from the commissioning phase to the operation phase in response to an elapsed time window and/or in response to a user instruction; wherein the commissioning phase is shorter than the operation phase.

The communication unit is adapted to switch its operating state from the operation phase back to the commissioning phase in response to a pre-determined event, wherein the pre-determined event comprises a reboot of the industrial controller system.

In some embodiments, the communication unit is realized in hardware. In other examples, the communication unit may be realized in software or firmware. The communication unit may also be realized partly in hardware and partly in software.

In an embodiment, the communication unit forms part of an industrial controller unit.

In other examples, the communication unit forms part of a gateway unit serving one or a plurality of industrial controller units.

According to an embodiment, the communication unit may be implemented in a firewall of an industrial controller unit, or in a firewall of a gateway unit.

The industrial controller system may further comprise a control unit communicatively coupled to the communication unit, wherein the control unit is adapted to run an industrial control program and/or to exchange data pertaining to the industrial control program with the communication unit.

The communication unit is adapted to, in the commissioning phase, establish a collection of the first communication partner units based on the incoming communications received from the at least one first communication partner unit over the communication link.

The communication unit may be adapted to, in the operation phase, check an incoming communication against the collection of the first communication partner units.

The communication unit is adapted to, in the operation phase, accept an incoming communication over the communication link if the incoming communication pertains to one of the at least one first communication partner units according to the collection.

According to an embodiment, the communication unit may be adapted to, in the operation phase, accept an accept an incoming communication over the communication link only if the incoming communication pertains to one of the at least one first communication partner units according to the collection, or upon receiving a user instruction.

The communication unit is adapted to, in the operation phase, block an incoming communication from every second communication partner unit that does not pertain to the collection, or for which no instruction is received from a user.

The communication unit is adapted to switch its operating state from the commissioning phase to the operation phase in response to an elapsed time window and/or in response to a user instruction.

### Brief Description of the Figures

The features and numerous advantages of the techniques according to the present disclosure will be best apparent from a detailed description of exemplary embodiments with reference to the accompanying drawings, in which:
- Fig. 1: is a schematic illustration of an industrial control environment in which the techniques according to the present invention may be employed;
- Fig. 2: schematically illustrates the communication between an industrial controller system and a plurality of first communication partner units in a commissioning phase according to an embodiment;
- Fig. 3: schematically illustrates the communication between the industrial controller system and first and second communication partner units in a subsequent operation phase according to an embodiment;
- Fig. 4: is a schematic illustration of an industrial controller system according to an embodiment;
- Fig. 5: is a schematic illustration of an industrial controller system comprising a gateway unit according to another embodiment;
- Fig. 6: is a schematic illustration of a communication unit that may be employed in an industrial controller system according to an embodiment; and
- Fig. 7: is a flow diagram illustrating a method for establishing a secure communication between an industrial controller system and a communication partner unit according to an embodiment.

### Description of Embodiments

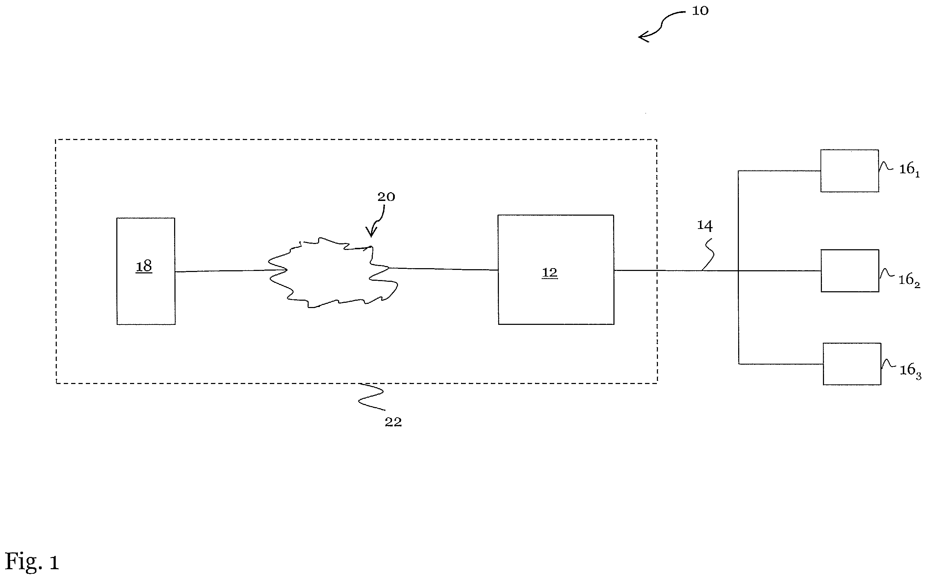

Fig. 1 is a schematic illustration of an industrial control environment 10 in which the method and techniques according to the present disclosure may be employed. For instance, the industrial control environment 10 may be a factory environment in which industrial control software is employed to control machinery for an industrial fabrication process. In other examples, the industrial control environment 10 may be an office building in which industrial control software is employed to control lighting and/or air conditioning applications.

The industrial control environment 10 comprises an industrial controller system 12 that is coupled via an industrial control network 14 to a group of machinery 16₁ to 16₃. The industrial controller system 12 may be an industrial controller unit that comprises a memory (not shown) and a processor (not shown) to store and run an industrial control program, such as a compiled industrial control program or ladder logic instructions. In accordance with the industrial control program, the industrial controller system 12 sends instructions to the machinery 16₁, 16₂, 16₃ via the industrial control network 14. In accordance with the instructions received from the industrial controller system 12 via the industrial control network 14, each of the machinery 16₁, 16₂, 16₃ may perform a dedicated manufacturing step, or perform a dedicated operation.

In some examples, the industrial controller system 12 may also receive and process data from the machinery 16₁, 16₂, 16₃ via the industrial control network 14, such as data pertaining to an operating state of the machinery 16₁, 16₂, 16₃ or measurement data relating to the controlled industrial process.

The industrial control network 14 may be any public or proprietary network adapted to exchange data between the industrial controller system 12 and the machinery 16₁, 16₂, 16₃. In some examples, the industrial control network 14 may be or may comprise a field bus network.

Fig. 1 shows a simplified schematic industrial control environment with only three controlled machines 16₁, 16₂, 16₃. However, this is for illustration purposes only, and in some applications the industrial controller system 12 may control a large number of machinery.

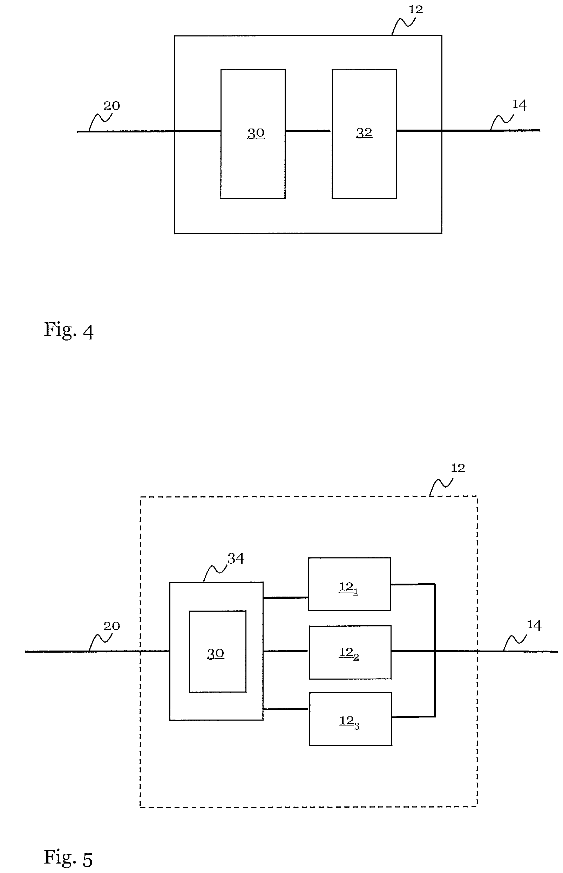

Moreover, in examples of the invention the industrial controller system 12 may comprise any number of industrial controller units, wherein each of the industrial controller units may be adapted to control a machinery or group of machinery or an industrial process in the way described above for the industrial controller system 12. A corresponding example is described further below with reference to Fig. 5

As can be further taken from Fig. 1, the industrial control environment 10 additionally comprises a first communication partner unit 18 that is connected to the industrial controller system 12 via a communication link 20.

The first communication partner unit 18 may be any device (implemented in hardware or software) with which the industrial controller system 12 may want to communicate in the context of performing its industrial control task. For instance, the first communication partner unit 18 may be an external programming environment that is adapted to access the industrial controller system 12 via the communication link 20 to provide the industrial controller 12 with dedicated control programs or parameters for control programs.

In other examples, the first communication partner unit 18 may comprise a monitoring unit adapted to monitor the functionality of the industrial controller system 12, or machinery 16₁, 16₂, 16₃, such as a SCADA system.

The communication link 20 may be any communication link that allows the first communication partner unit 18 to communicate with the industrial controller system 12. In some examples, the communication link 20 is part of a proprietary or public network, such as the Internet.

The schematic illustration of Fig. 1 shows the communication link 20 as different and distinct from the industrial control network 14. However, this is for convenience and ease of presentation only, and in some examples the communication link 20 may form part of the industrial control network 14, or vice versa.

The industrial controller system 12, first communication partner unit 18 and communication link 20 together form an industrial control communication environment 22, which is indicated in Fig. 1 by dashed lines. In the example of Fig. 1, the industrial control communication environment 22 comprises only a single first communication partner unit 18 and a single communication link 20. However, this is for illustration only, and in some examples the industrial control communication environment 22 may comprise a plurality of first communication partner units 18, which are adapted to communicate with the industrial controller system 12 via a common or a plurality of separate dedicated communication links 20.

In a conventional industrial control communication environment 22, the industrial controller system 12 generally takes the server role in communication with the first communication partner unit 18, and the first communication partner unit 18 acts as a client with respect to the industrial controller system 12. As a consequence, in most existing protocols, the first communication partner unit 18 opens a connection to the industrial controller system 12, such as in a HTTP protocol for web visualization, an OPC UA protocol to read and write variables, or proprietary protocols like ARTI₃ for software download, debugging, etc. According to these established protocols, the industrial controller system 12 needs to validate every incoming communication attempt from a first communication partner unit 18. Each such open communication endpoint is a potentially harmful attack vector, the more so since operating systems and firmware/software on industrial controller systems 12 are sometimes not as regularly updated as office personal computers.

The techniques according to the present disclosure address this problem with an industrial controller system 12 that may be adapted to operate in different operation phases, or operation modes: In a commissioning phase, the industrial controller system 12 may operate as a server and accept an incoming communication via the communication link 20 from any potential first communication partner unit 18, and may establish a bidirectional communication channel to the first communication partner unit 18 in response to the incoming communication.

Subsequently, the industrial controller system 12 may be adapted to switch to an operation phase, in which the industrial controller system 12 communicates with the first communication partner units 18 via the bidirectional communication channel established in the commissioning phase, but may block any incoming communication from a communication partner unit that is different from the first communication partner units with which communication has been established in the commissioning phase.

The techniques according to the present disclosure limit the potential exposure of the industrial controller system 12 to unauthorized access or malware effectively to the commissioning phase, which is typically relatively short and in which the industrial controller system 12 and the connections to the first communication partner units 18 may be supervised closely by operating personnel. In the subsequent operation phase, the industrial controller system may, in some embodiments, only communicate with a set of trusted first communication partner units 18, thereby reducing the risk of unauthorized access or malware originating from second communication partner units different from the (trusted) first communication partner units.

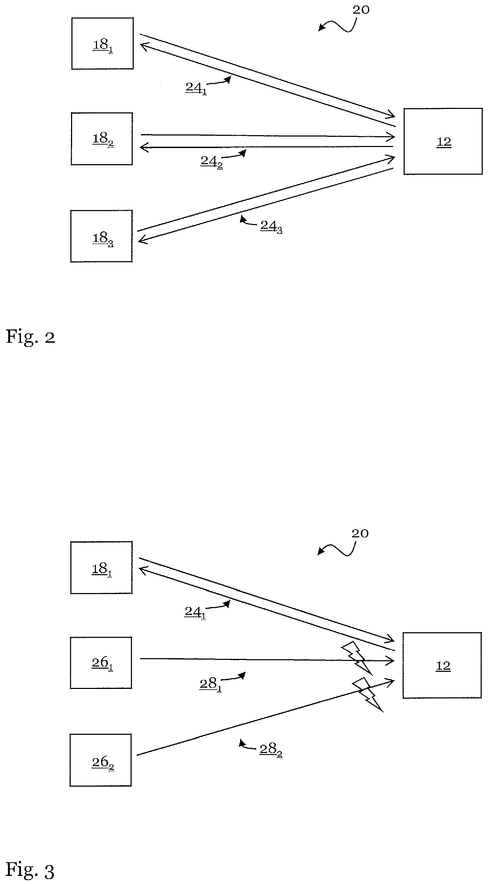

Fig. 2 schematically illustrates an exemplary communication scenario in the commissioning phase. In the commissioning phase, a plurality of first communication partner units 18₁, 18₂, 18₃ may, as a client, contact the industrial controller system 12 via the communication link 20 with a request to establish a bidirectional communication channel with the industrial controller system 12. Provided that the incoming requests from the respective first communication partner units 18₁, 18₂, 18₃ satisfy pre-defined conditions, such as pertain to a pre-defined communication protocol or have the right data type, the industrial controller system 12 will respond to the request. The industrial controller system 12 and the respective first communication partner units 18₁, 18₂, 18₃ may then together establish respective bidirectional communication channels 24₁, 24₂, 24₃, which allow the industrial controller system 12 and the first communication partner units 18₁, 18₂, 18₃ to exchange data via the communication link 20.

For ease of presentation, Fig. 2 shows a configuration with only three first communication partner units 18₁, 18₂, 18₃. However, it will be understood that the industrial controller system 12 may establish bidirectional communication channels with any number of first communication partner units during the commissioning phase.

The commissioning phase may be an operational phase in which the industrial controller system 12 operates either upon startup of the industrial controller system, reboot, or in response to a user instruction.

After a pre-determined time window, such as after five minutes or after ten minutes, or upon receipt of a dedicated user instruction, the industrial controller system 12 may change its operational state and switch to the operation phase, which is schematically illustrated in Fig. 3.

In the operation phase, the industrial controller system 12 may continue to communicate, via the bidirectional communication channels 24₁, 24₂, 24₃, with the first communication partner units 18₁, 18₂, 18₃ as established in the commissioning phase. For ease of presentation, Fig. 3 only shows a single first communication partner unit 18₁ connected to the industrial controller system 12 via the bidirectional communication channel 24₁.

Fig. 3 shows in addition what happens when second communication partner units 26₁, 26₂ that are different from the established first communication partner units 18₁, 18₂, 18₃ try to establish a communication with the industrial controller system 12 in the operation phase subsequent to the commissioning phase. The second communication partner units 26₁, 26₂ may be similar in design and functionality to the first communication partner units 18₁, 18₂, 18₃, and would have been accepted for communication in the commissioning phase. However, when they attempt to communicate with the industrial controller system 12 in the operation phase, the industrial controller system 12 blocks the incoming communication requests 28₁, 28₂, and no bidirectional communication channel is established with the second communication partner units 26₁, 26₂. Hence, in the operation phase the industrial controller system 12 is protected against unauthorized access or malware from the second communication partner units 26₁, 26₂.

Fig. 4 is a schematic illustration of an industrial controller system 12 that may be employed in the context of the present disclosure. The industrial controller system 12 may be an industrial controller unit and may comprise a communication unit 30 and a control unit 32 communicatively coupled to the communication unit 30.

The communication unit 30 may be adapted to communicate with one or a plurality of first communication partner units via the communication link 20. The communication unit 30 may further be adapted to switch back and forth between a commissioning phase and an operation phase. As described above with reference to Figs. 2 and 3, in the commissioning phase the communication unit 30 may accept an incoming communication from any first communication partner unit 18₁, 18₂, 18₃ over the communication link 20, and may establish a bidirectional communication channel with the respective first communication partner unit.

In the operation phase, the communication unit 30 may continually communicate with the at least one first communication partner unit 18₁, 18₂, 18₃ via the established bidirectional communication channel, but may block an incoming communication from a second communication partner unit 26₁, 26₂ differing from the first communication partner unit 18₁, 18₂, 18₃.

The control unit 32 may be adapted to run an industrial control program, such as a compiled industrial control program or ladder logic instructions. The control unit 32 may forward instructions to the machinery 16₁, 16₂, 16₃ via the industrial control network 14 in accordance with the industrial control program, and/or may receive, via the industrial control network 14, parameters from the controlled machinery 16₁, 16₂, 16₃. A user may access the control unit 32 externally, from a first communication partner unit 18₁, 18₂, 18₃, via the communication link 20 and communication unit 30. For instance, the communication partner unit 18₁, 18₂, 18₃ may comprise a SCADA (supervisory control and data acquisition) system that may be employed to monitor the operation of the control unit 32 remotely via the communication link 20 and the communication unit 30.

Fig. 4 shows a configuration in which the industrial controller system 12 is a single industrial controller. However, the disclosure is not so limited. In other examples, the industrial controller system 12 may comprise a plurality of industrial controller units.

As an example, Fig. 5 shows a configuration in which the industrial controller system comprises three industrial controller units 12₁, 12₂, 12₃ which may each control separate machinery, such as the machinery 16₁, 16₂, 16₃, via the industrial control network 14. The industrial controller system 12 further comprises a gateway unit 34, which is communicatively coupled to each of the industrial controller units 12₁, 12₂, 12₃ and may serve as a common gateway, such as an ARTI₃ gateway, for each of the industrial controller units 12₁, 12₂, 12₃. Communication of the industrial controller units 12₁, 12₂, 12₃ with the communication link 20 is via the gateway unit 34.

The gateway unit 34 may comprise a communication unit 30 that is similar in design and functionality to the communication unit 30 described above with reference to the embodiment of Fig. 4, and hence shares the same reference numeral.

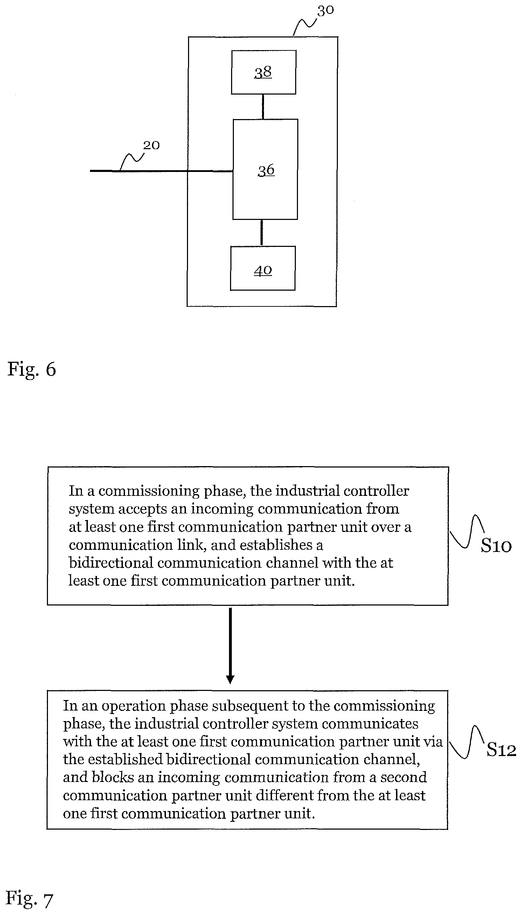

Fig. 6 is a schematic illustration of a communication unit 30 as it may be employed in the embodiments described above with reference to Figs. 4 and 5.

The communication unit 30 comprises a processing element 36, a timer element 38 and a storage element 40, which are communicatively coupled to one another in the communication unit 30.

The processing element 36 may comprise a central processing unit (CPU) and may be adapted to run software for handling the communication with the first communication partner units 18₁, 18₂, 18₃ via the communication link 20, and for switching the functionality of the communication unit 30 back and forth between the commissioning phase and the operation phase. The timer element 38 may provide a timing signal which may trigger the processing element 36 to switch from the commissioning phase to the operation phase. The timing signal may be provided once a user-defined time threshold is reached, such as five minutes or ten minutes after startup of the industrial controller system 12.

The storage element 40 may store a list of first communication partner units 18₁, 18₂, 18₃ with which a bidirectional communication channel has been established in the commissioning phase. Based on this list, the processing element 36 may subsequently decide, during the operation phase, whether to accept or reject incoming communication on the communication link 20. In case the incoming communication is from one of the first communication partner units 18₁, 18₂, 18₃ according to the list, the incoming communication may be accepted. Incoming communication from a second communication partner unit 26₁, 26₂ different from the first communication partner units 18₁, 18₂, 18₃ of the list may be rejected.

In some examples, a user may access the communication unit 30, such as via the communication link 20 or a different communication interface, to edit the list of first communication partner units 18₁, 18₂, 18₃ stored in the storage element 40, such as to add or delete communication partner units from the list to thereby affect how the processing element 36 handles future incoming communication requests.

Fig. 7 is a flow diagram that illustrates a method for establishing a secure communication between an industrial controller system and a communication partner unit according to an embodiment.

In a first step S10 pertaining to a commissioning phase, the industrial controller system accepts an incoming communication from at least one first communication partner unit over a communication link, and establishes a bidirectional communication channel with the at least one first communication partner unit.

In a second step S12 pertaining to an operation phase subsequent to the commissioning phase, the industrial controller system communicates with the at least one first communication partner unit via the established bidirectional communication channel, and blocks an incoming communication from a second communication partner unit different from the at least one first communication partner unit.

The description and the Figures merely serve to illustrate the invention and the numerous advantages associated therewith, but should not be understood to imply any limitation. The scope of the invention is to be determined from the appended claims.

## Claims

1. A method for establishing a secure communication between an industrial controller system (12) and a communication partner unit (18; 18₁, 18₂, 18₃) over a communication link (20), wherein:
in a commissioning phase, the industrial controller system (12) accepts an incoming communication from at least one first communication partner unit (18; 18₁, 18₂, 18₃) over a communication link (20), and establishes a bidirectional communication channel (24₁, 24₂, 24₃) with the at least one first communication partner unit (18; 18₁, 18₂, 18₃); and
in an operation phase subsequent to the commissioning phase, the industrial controller system (12) communicates with the at least one first communication partner unit (18; 18₁, 18₂, 18₃) via the established bidirectional communication channel (24₁, 24₂, 24₃),
**characterized in that** the industrial controller system (12), in the operation phase, blocks an incoming communication from a second communication partner unit (26₁, 26₂) different from the at least one first communication partner unit (18; 18₁, 18₂, 18₃);
wherein, in the commissioning phase, the industrial controller system (12) accepts an identified incoming communication request over the communication link (20) from any first communication partner unit (18; 18₁, 18₂, 18₃), and establishes a collection of the first communication partner units (18; 18₁, 18₂, 18₃) based on the incoming communications received from the at least one first communication partner unit (18; 18₁, 18₂, 18₃) over the communication link (20);
wherein, in the operation phase, the industrial controller system (12) accepts an incoming communication over the communication link (20) if the incoming communication pertains to one of the at least one first communication partner units (18; 18₁, 18₂, 18₃) according to the collection;
wherein, in the operation phase, the industrial controller system (12) blocks an incoming communication from every second communication partner unit (26₁, 26₂) that does not pertain to the collection, or for which no instruction is received from a user;
wherein the industrial controller system (12) switches to the commissioning phase automatically upon start-up of the industrial controller system (12);
wherein the industrial controller system (12) switches from the commissioning phase to the operation phase in response to an elapsed time window and/or in response to a user instruction;
wherein the commissioning phase is shorter than the operation phase; and
wherein the industrial controller system (12) switches from the operation phase back to the commissioning phase in response to a pre-determined event, wherein the pre-determined event comprises a reboot of the industrial controller system (12).

2. The method according to claim 1, wherein the industrial controller system (12) switches to the commissioning phase upon receipt of a user instruction.

3. The method according to any of the preceding claims, wherein the industrial controller system (12) switches from the operation phase back to the commissioning phase in response to a user instruction.

4. A computer program comprising computer-readable instructions, wherein the computer-readable instructions are adapted, when read on a computer, to implement on an industrial controller system (12) a method according to any of the preceding claims.

5. An industrial controller system (12), comprising:
a communication unit (30) adapted to, in a commissioning phase, accept an incoming communication from at least one first communication partner unit (18; 18₁, 18₂, 18₃) over a communication link (20), and to establish a bidirectional communication channel (24₁, 24₂, 24₃) with the at least one first communication partner unit (18; 18₁, 18₂, 18₃);
the communication unit (30) further adapted to, in an operation phase subsequent to the commissioning phase, communicate with the at least one first communication partner unit (18; 18₁, 18₂, 18₃) via the established bidirectional communication channel (24₁, 24₂, 24₃),
**characterized in that** the communication unit (30) is adapted to block an incoming communication from a second communication partner unit (26₁, 26₂) different from the at least one first communication partner unit (18; 18₁, 18₂, 18₃) in the operation phase;
wherein the communication unit (30) is adapted to, in the commissioning phase, accept an identified incoming communication request over the communication link (20) from any first communication partner unit (18; 18₁, 18₂, 18₃), and establish a collection of the first communication partner units (18; 18₁, 18₂, 18₃) based on the incoming communications received from the at least one first communication partner unit (18; 18₁,18₂,18₃) over the communication link (20);
wherein the communication unit (30) is adapted to, in the operation phase, accept an incoming communication over the communication link (20) if the incoming communication pertains to one of the at least one first communication partner units (18; 18₁, 18₂, 18₃) according to the collection;
wherein the communication unit (30) is adapted to, in the operation phase, block an incoming communication from every second communication partner unit (26₁, 26₂) that does not pertain to the collection, or for which no instruction is received from a user;
wherein the communication unit (30) is adapted to switch its operating state to the commissioning phase automatically upon start-up of the industrial controller system (12);
wherein the communication unit (30) is adapted to switch its operating state from the commissioning phase to the operation phase in response to an elapsed time window and/or in response to a user instruction;
wherein the commissioning phase is shorter than the operation phase; and
wherein the communication unit (30) is adapted to switch its operating state from the operation phase back to the commissioning phase in response to a pre-determined event, wherein the pre-determined event comprises a reboot of the industrial controller system (12).

6. The industrial controller system (12) according to claim 5, wherein the communication unit (30) is adapted to switch its operating state to the commissioning phase upon receipt of a user instruction.

7. The industrial controller system (12) according to claim 5 or 6, wherein the communication unit (30) is adapted to switch its operating state from the operation phase back to the commissioning phase in response to a user instruction.

## Patentansprüche

1. Verfahren zum Etablieren einer sicheren Kommunikation zwischen einem industriellen Steuerungssystem (12) und einer Kommunikationspartnereinheit (18; 18₁, 18₂, 18₃) über eine Kommunikationsverbindung (20), wobei:
in einer Kommissionierungsphase das industrielle Steuerungssystem (12) eine von mindestens einer ersten Kommunikationspartnereinheit (18; 18₁, 18₂, 18₃) über eine Kommunikationsverbindung (20) eingehende Kommunikation annimmt und einen bidirektionalen Kommunikationskanal (24₁, 24₂, 24₃) mit der mindestens einen ersten Kommunikationspartnereinheit (18; 18₁, 18₂, 18₃) etabliert; und
in einer Betriebsphase nach der Kommissionierungsphase das industrielle Steuerungssystem (12) mit der mindestens einen ersten Kommunikationspartnereinheit (18; 18₁, 18₂, 18₃) über den etablierten bidirektionalen Kommunikationskanal (24₁, 24₂, 24₃) kommuniziert,
**dadurch gekennzeichnet, dass** das industrielle Steuerungssystem (12) in der Betriebsphase eine eingehende Kommunikation von einer zweiten Kommunikationspartnereinheit (26₁, 26₂), die sich von der mindestens einen ersten Kommunikationspartnereinheit (18; 18₁, 18₂, 18₃) unterscheidet, blockiert;
wobei in der Kommissionierungsphase das industrielle Steuerungssystem (12) eine identifizierte, über die Kommunikationsverbindung (20) eingehende Kommunikationsanforderung von einer beliebigen ersten Kommunikationspartnereinheit (18; 18₁, 18₂, 18₃) annimmt und eine Sammlung der ersten Kommunikationspartnereinheiten (18; 18₁, 18₂, 18₃) basierend auf den eingehenden Kommunikationen, die von der mindestens einen ersten Kommunikationspartnereinheit (18; 18₁, 18₂, 18₃) über die Kommunikationsverbindung (20) empfangen werden, etabliert;
wobei in der Betriebsphase das industrielle Steuerungssystem (12) eine eingehende Kommunikation über die Kommunikationsverbindung (20) annimmt, falls die eingehende Kommunikation eine der mindestens einen ersten Kommunikationspartnereinheiten (18; 18₁, 18₂, 18₃) entsprechend der Sammlung betrifft;
wobei in der Betriebsphase das industrielle Steuerungssystem (12) eine eingehende Kommunikation von jeder zweiten Kommunikationspartnereinheit (26₁, 26₂) blockiert, die nicht die Sammlung betrifft oder für die keine Anweisung von einem Benutzer empfangen wird;
wobei das industrielle Steuerungssystem (12) bei Inbetriebnahme des industriellen Steuerungssystems (12) automatisch in die Kommissionierungsphase schaltet;
wobei das industrielle Steuerungssystem (12) als Reaktion auf ein verstrichenes Zeitfenster und/oder als Reaktion auf eine Benutzeranweisung von der Kommissionierungsphase in die Betriebsphase schaltet;
wobei die Kommissionierungsphase kürzer als die Betriebsphase ist; und
wobei das industrielle Steuerungssystem (12) als Reaktion auf ein vorbestimmtes Ereignis von der Betriebsphase zurück in die Kommissionierungsphase schaltet, wobei das vorbestimmte Ereignis einen Neustart des industriellen Steuerungssystems (12) umfasst.

2. Verfahren nach Anspruch 1, wobei das industrielle Steuerungssystem (12) bei Empfang einer Benutzeranweisung in die Kommissionierungsphase schaltet.

3. Verfahren nach einem der vorhergehenden Ansprüche, wobei das industrielle Steuerungssystem (12) als Reaktion auf eine Benutzeranweisung von der Betriebsphase zurück in die Kommissionierungsphase schaltet.

4. Computerprogramm, umfassend computerlesbare Anweisungen, wobei die computerlesbaren Anweisungen, wenn sie auf einem Computer gelesen werden, dazu eingerichtet sind, um auf einem industriellen Steuerungssystem (12) ein Verfahren nach einem der vorhergehenden Ansprüche zu implementieren.

5. Industrielles Steuerungssystem (12), umfassend:
eine Kommunikationseinheit (30), die dazu eingerichtet ist, in einer Kommissionierungsphase eine eingehende Kommunikation von mindestens einer ersten Kommunikationspartnereinheit (18; 18₁, 18₂, 18₃) über eine Kommunikationsverbindung (20) anzunehmen und einen bidirektionalen Kommunikationskanal (24₁, 24₂, 24₃) mit der mindestens einen ersten Kommunikationspartnereinheit (18; 18₁, 18₂, 18₃) zu etablieren;
wobei die Kommunikationseinheit (30) ferner dazu eingerichtet ist, in einer Betriebsphase nach der Kommissionierungsphase mit der mindestens einen ersten Kommunikationspartnereinheit (18; 18₁, 18₂, 18₃) über den etablierten bidirektionalen Kommunikationskanal (24₁, 24₂, 24₃) zu kommunizieren,
**dadurch gekennzeichnet, dass** die Kommunikationseinheit (30) dazu eingerichtet ist, eine eingehende Kommunikation von einer zweiten Kommunikationspartnereinheit (26₁, 26₂), die sich von der mindestens einen ersten Kommunikationspartnereinheit (18; 18₁, 18₂, 18₃) unterscheidet, in der Betriebsphase zu blockieren;
wobei die Kommunikationseinheit (30) dazu eingerichtet ist, in der Kommissionierungsphase eine identifizierte, über die Kommunikationsverbindung (20) eingehende Kommunikationsanforderung von einer beliebigen ersten Kommunikationspartnereinheit (18; 18₁, 18₂, 18₃) anzunehmen und eine Sammlung der ersten Kommunikationspartnereinheiten (18; 18₁, 18₂, 18₃) basierend auf den eingehenden Kommunikationen, die von der mindestens einen ersten Kommunikationspartnereinheit (18; 18₁, 18₂, 18₃) über die Kommunikationsverbindung (20) empfangen werden, zu etablieren;
wobei die Kommunikationseinheit (30) dazu eingerichtet ist, in der Betriebsphase eine eingehende Kommunikation über die Kommunikationsverbindung (20) anzunehmen, falls die eingehende Kommunikation eine der mindestens einen ersten Kommunikationspartnereinheiten (18; 18₁, 18₂, 18₃) entsprechend der Sammlung betrifft;
wobei die Kommunikationseinheit (30) dazu eingerichtet ist, in der Betriebsphase eine eingehende Kommunikation von jeder zweiten Kommunikationspartnereinheit (26₁, 26₂) zu blockieren, die nicht die Sammlung betrifft oder für die keine Anweisung von einem Benutzer empfangen wird;
wobei die Kommunikationseinheit (30) dazu eingerichtet ist, ihren Betriebszustand bei Inbetriebnahme des industriellen Steuerungssystems (12) automatisch in die Kommissionierungsphase zu schalten;
wobei die Kommunikationseinheit (30) dazu eingerichtet ist, ihren Betriebszustand als Reaktion auf ein verstrichenes Zeitfenster und/oder als Reaktion auf eine Benutzeranweisung von der Kommissionierungsphase in die Betriebsphase zu schalten;
wobei die Kommissionierungsphase kürzer als die Betriebsphase ist; und
wobei die Kommunikationseinheit (30) dazu eingerichtet ist, ihren Betriebszustand als Reaktion auf ein vorbestimmtes Ereignis von der Betriebsphase zurück in die Kommissionierungsphase zu schalten, wobei das vorbestimmte Ereignis einen Neustart des industriellen Steuerungssystems (12) umfasst.

6. Industrielles Steuerungssystem (12) nach Anspruch 5, wobei die Kommunikationseinheit (30) dazu eingerichtet ist, ihren Betriebszustand bei Empfang einer Benutzeranweisung in die Kommissionierungsphase zu schalten.

7. Industrielles Steuerungssystem (12) nach Anspruch 5 oder 6, wobei die Kommunikationseinheit (30) dazu eingerichtet ist, ihren Betriebszustand als Reaktion auf eine Benutzeranweisung von der Betriebsphase zurück in die Kommissionierungsphase zu schalten.

## Revendications

1. Procédé d'établissement d'une communication sécurisée entre un système de contrôleur industriel (12) et une unité partenaire de communication (18 ; 18₁, 18₂, 18₃) sur une liaison de communications (20), dans lequel :
dans une phase de mise en service, le système de contrôleur industriel (12) accepte une communication entrante à partir d'au moins une première unité partenaire de communication (18 ; 18₁, 18₂, 18₃) sur une liaison de communications (20) et établit un canal de communication bidirectionnel (24₁, 24₂, 24₃) avec l'au moins une première unité partenaire de communication (18 ; 18₁, 18₂, 18₃) ; et
dans une phase de fonctionnement consécutive à la phase de mise en service, le système de contrôleur industriel (12) communique avec l'au moins une première unité partenaire de communication (18; 18₁, 18₂, 18₃) via le canal de communication bidirectionnel (24₁, 24₂, 24₃) établi,
**caractérisé en ce que** le système de contrôleur industriel (12), dans la phase de fonctionnement, bloque une communication entrante à partir d'une seconde unité partenaire de communication (26₁, 26₂) différente de l'au moins une première unité partenaire de communication (18 ; 18₁, 18₂, 18₃) ;
dans lequel, dans la phase de mise en service, le système de contrôleur industriel (12) accepte une demande de communication entrante identifiée sur la liaison de communications (20) à partir d'une quelconque première unité partenaire de communication (18 ; 18₁, 18₂, 18₃) et établit une collecte des premières unités partenaires de communication (18 ; 18₁, 18₂, 18₃) sur la base des communications entrantes reçues de l'au moins une première unité partenaire de communication (18 ; 18₁, 18₂, 18₃) sur la liaison de communications (20) ;
dans lequel, dans la phase de fonctionnement, le système de contrôleur industriel (12) accepte une communication entrante sur la liaison de communications (20) si la communication entrante concerne l'une des au moins une premières unités partenaires de communication (18 ; 18₁, 18₂, 18₃) selon la collecte ;
dans lequel, dans la phase de fonctionnement, le système de contrôleur industriel (12) bloque une communication entrante provenant de chaque seconde unité partenaire de communication (26₁, 26₂) qui ne concerne pas la collecte, ou pour laquelle aucune instruction n'est reçue d'un utilisateur ;
dans lequel le système de contrôleur industriel (12) bascule vers la phase de mise en service automatiquement lors du démarrage du système de contrôleur industriel (12) ;
dans lequel le système de contrôleur industriel (12) bascule de la phase de mise en service vers la phase de fonctionnement en réponse à une fenêtre temporelle écoulée et/ou en réponse à une instruction d'utilisateur ;
dans lequel la phase de mise en service est plus courte que la phase de fonctionnement ; et
dans lequel le système de contrôleur industriel (12) bascule à nouveau de la phase de fonctionnement vers la phase de mise en service en réponse à un événement prédéterminé, dans lequel l'événement prédéterminé comprend une réinitialisation du système de contrôleur industriel (12).

2. Procédé selon la revendication 1, dans lequel le système de contrôleur industriel (12) bascule vers la phase de mise en service lors de la réception d'une instruction d'utilisateur.

3. Procédé selon l'une quelconque des revendications précédentes, dans lequel le système de contrôleur industriel (12) bascule à nouveau de la phase de fonctionnement vers la phase de mise en service en réponse à une instruction d'utilisateur.

4. Programme informatique comprenant des instructions lisibles par ordinateur, dans lequel les instructions lisibles par ordinateur sont adaptées, lorsqu'elles sont lues sur un ordinateur, pour mettre en oeuvre sur un système de contrôleur industriel (12) un procédé selon l'une quelconque des revendications précédentes.

5. Système de contrôleur industriel (12), comprenant :
une unité de communication (30) adaptée pour accepter, dans une phase de mise en service, une communication entrante provenant d'au moins une première unité partenaire de communication (18 ; 18₁, 18₂, 18₃) sur une liaison de communications (20), et pour établir un canal de communication bidirectionnel (24₁, 24₂, 24₃) avec l'au moins une première unité partenaire de communication (18 ; 18₁, 18₂, 18₃) ;
l'unité de communication (30) adaptée en outre pour communiquer, dans une phase de fonctionnement consécutive à la phase de mise en service, avec l'au moins une première unité partenaire de communication (18 ; 18₁, 18₂, 18₃) via le canal de communication bidirectionnel établi (24₁, 24₂, 24₃),
**caractérisé en ce que** l'unité de communication (30) est adaptée pour bloquer une communication entrante provenant d'une seconde unité partenaire de communication (26₁, 26₂) différente de l'au moins une première unité partenaire de communication (18 ; 18₁, 18₂, 18₃) dans la phase de fonctionnement ;
dans lequel l'unité de communication (30) est adaptée pour accepter, dans la phase de mise en service, une demande de communication entrante identifiée sur la liaison de communications (20) provenant d'une quelconque première unité partenaire de communication (18 ; 18₁, 18₂, 18₃), et établir une collecte des premières unités partenaires de communication (18 ; 18₁, 18₂, 18₃) sur la base des communications entrantes reçues de l'au moins une première unité partenaire de communication (18 ; 18₁, 18₂, 18₃) sur la liaison de communications (20) ;
dans lequel l'unité de communication (30) est adaptée pour accepter, dans la phase de fonctionnement, une communication entrante sur la liaison de communications (20) si la communication entrante concerne l'une des au moins une premières unités partenaires de communication (18 ; 18₁, 18₂, 18₃) selon la collecte ;
dans lequel l'unité de communication (30) est adaptée pour bloquer, dans la phase de fonctionnement, une communication entrante provenant de chaque seconde unité partenaire de communication (26₁, 26₂) qui ne concerne pas la collecte, ou pour laquelle aucune instruction n'est reçue d'un utilisateur ;
dans lequel l'unité de communication (30) est adaptée pour faire basculer sont état fonctionnel vers la phase de mise en service automatiquement lors du démarrage du système de contrôleur industriel (12) ;
dans lequel l'unité de communication (30) est adaptée pour faire basculer son état fonctionnel de la phase de mise en service vers la phase de fonctionnement en réponse à une fenêtre temporelle écoulée et/ou en réponse à une instruction d'utilisateur ;
dans lequel la phase de mise en service est plus courte que la phase de fonctionnement ; et
dans lequel l'unité de communication (30) est adaptée pour faire basculer à nouveau son état fonctionnel de la phase de fonctionnement vers la phase de mise en service en réponse à un événement prédéterminé, dans lequel l'événement prédéterminé comprend une réinitialisation du système de contrôleur industriel (12).

6. Système de contrôleur industriel (12) selon la revendication 5, dans lequel l'unité de communication (30) est adaptée pour faire basculer son état fonctionnel vers la phase de mise en service lors de la réception d'une instruction d'utilisateur.

7. Système de contrôleur industriel (12) selon la revendication 5 ou 6, dans lequel l'unité de communication (30) est adaptée pour faire basculer à nouveau son état fonctionnel de la phase de fonctionnement vers la phase de mise en service en réponse à une instruction d'utilisateur.
